# FASCICULE DE BREVET EUROPEEN

(11) **EP 4 206 162 B1**
(45) Date de publication et mention de la délivrance du brevet: **07.08.2024**
(21) Numéro de dépôt: 22215699.4
(22) Date de dépôt: 21.12.2022
(51) Int. Cl.: C04B 35/51, C01F 15/00, C04B 35/624, C04B 35/626

(54) **PROCÉDÉ DE PRÉPARATION D'UNE POUDRE D'OXYDE(S) D'ACTINIDE(S) À PARTIR D'UNE SOLUTION SOL-GEL COLLOÏDALE**
VERFAHREN ZUR HERSTELLUNG EINES OXIDPULVERS VON AKTINIDEN AUS EINER KOLLOIDALEN SOL-GEL-LÖSUNG
METHOD FOR PREPARING AN ACTINIDE OXIDE POWDER FROM A COLLOIDAL SOL-GEL SOLUTION

(30) Priorité: 30.12.2021 FR 2114694
(43) Date de publication de la demande: 05.07.2023
(73) Titulaire: Commissariat à l'énergie atomique et aux énergies alternatives, 75015 Paris (FR)
(72) Inventeur: REBISCOUL, Diane, 30290 LAUDUN (FR); LU, Zijie, 84000 AVIGNON (FR); ZEMB, Thomas, 78220 VIROFLAY (FR)
(74) Mandataire: Brevalex

(56) Documents cités:
- FR-A1- 3 070 278
- US-A- 3 280 011
- HENNIG CHRISTOPH ET AL: "Structure and stability range of a hexanuclear Th(iv)-glycine complex", vol. 41, no. 41, 2012, Cambridge, pages 12818, XP055959771, ISSN: 1477-9226, Retrieved from the Internet <URL:https://pubs.rsc.org/en/content/articlepdf/2012/dt/c2dt31367g> [retrieved on 20220913], DOI: 10.1039/c2dt31367g
- ANNIE D ET AL: "Freeze drying vs microwave drying-methods for synthesis of sinteractive thoria powders", vol. 484, 18 November 2016 (2016-11-18), pages 51 - 58, XP029885143, ISSN: 0022-3115, Retrieved from the Internet <URL:https://www.sciencedirect.com/science/article/pii/S0022311516307036?via%3Dihub> [retrieved on 20220913], DOI: 10.1016/J.JNUCMAT.2016.11.019

## Description

### DOMAINE TECHNIQUE

L'invention a trait à un procédé de préparation d'une poudre d'oxyde(s) d'actinide(s) à partir d'une solution sol-gel colloïdale stable comprenant des colloïdes de tailles contrôlées issus de la polycondensation partielle de nitrate(s) d'actinide(s), ladite poudre pouvant être caractérisée par une microporosité uniformément répartie, percolante, avec des micropores de tailles contrôlées et interconnectés et pouvant se caractériser également par une macroporosité permettant une meilleure accessibilité de la microporosité pour tout processus physique ou chimique nécessitant d'être réalisé à la surface du matériau et ainsi une meilleure surface spécifique.

De par leur nature, à savoir le fait qu'elles soient en céramique oxyde, les poudres obtenues par le procédé de l'invention présentent les propriétés inhérentes à une céramique oxyde, à savoir, le caractère réfractaire, la stabilité thermique ou chimique dans une large gamme de milieux.

Au vu des propriétés physico-chimiques susmentionnées, l'invention peut ainsi trouver application dans le domaine des céramiques poreuses, de la catalyse ou encore le domaine des combustibles nucléaires.

Comme mentionné ci-dessus, les poudres de l'invention sont obtenues à partir d'une solution-gel colloïdale, qui résulte donc d'un procédé sol-gel.

Classiquement, le procédé sol-gel rentre dans la catégorie des procédés d'élaboration des matériaux inorganiques ou hybrides en voie humide et à faibles températures (généralement en-dessous de 100°C avant le traitement thermique). D'un point de vue opérationnel, le procédé sol-gel implique l'utilisation de précurseurs métalliques (généralement sous forme d'alcoxydes ou sous forme de sels), qui sont, dans un premier temps, dissous dans au moins un solvant (aqueux ou organique) puis subissent, dans une deuxième temps, une transition sol-gel provenant d'un déclenchement de réactions d'hydrolyse puis de condensation pour former la formation de ponts hydroxos (M-OH-M) ou oxos (M-O-M) entre les atomes métalliques M et la formation concomitante d'un réseau tridimensionnel gonflé de solvant, que l'on peut qualifier de gel. Le gel peut être ensuite soumis à un séchage, pour éliminer la phase liquide, éventuellement une mise en forme (selon la nature du matériau que l'on souhaite obtenir, par exemple, une poudre, un film, un matériau monolithique) et un traitement final thermique (par exemple, une calcination, un frittage) en fonction de la nature du matériau recherché.

Deux types de procédés sol-gel existent : le procédé sol-gel polymérique et le procédé sol-gel colloïdal, lesquels se différencient par la nature du précurseur utilisé, d'une part (un précurseur alcoxyde pour le procédé sol-gel polymérique et un précurseur sel pour le procédé sol-gel colloïdal) et qui se différencient, d'autre part, par la nature physico-chimique du sol relative aux conditions de polymérisation inorganique.

Dans le procédé sol-gel polymérique, la transition sol-gel s'effectue par la formation de chaînes polymériques qui s'entremêlent pourformer un réseau tridimensionnel pouvant être qualifié de « gel polymérique ».

Dans le procédé sol-gel colloïdal, le procédé repose sur la formation d'un sol, c'est-à-dire d'une dispersion de particules denses par nucléation, lesdites particules présentant généralement une taille nanométrique (par exemple, de quelques nanomètres à quelques dizaines de nanomètres), la dispersion étant amenée à être déstabilisée de manière contrôlée jusqu'à former un réseau tridimensionnel formé de particules du sol liées entre elles par des liaisons oxo et hydroxos sans précipitation, ce réseau pouvant être qualifié de gel colloïdal.

En partant de cette voie de synthèse colloïdale, les Inventeurs se sont fixé pour objectif de mettre au point un procédé de fabrication d'une poudre d'oxyde(s) d'actinide(s) se présentant, avantageusement, sous forme d'un empilement de nanoparticules et présentant, avantageusement, une microporosité uniformément répartie, percolante, avec des micropores de tailles contrôlées et interconnectés et se caractérisant, avantageusement, par une macroporosité permettant une meilleure accessibilité de la microporosité pour tout processus physique ou chimique nécessitant d'être réalisé à la surface du matériau et ainsi une meilleure surface spécifique.

Le document US 3 280 011 A décrit une méthode de préparation d'un sol d'oxyde de thorium.

### EXPOSÉ DE L'INVENTION

Ainsi, l'invention a trait à un procédé de préparation d'une poudre d'oxyde(s) d'actinide(s) comprenant les étapes suivantes :
a) une étape de préparation d'une solution sol-gel comprenant des colloïdes à base d'actinide(s) par mise en contact d'au moins un nitrate d'actinide avec au moins un acide aminé, la mise en contact s'effectuant à un pH allant de 3 à 6 ;
b) une étape de lyophilisation de ladite solution obtenue en a), moyennant quoi il résulte une pâte ;
c) une étape de traitement thermique de ladite pâte obtenue en b) à une température efficace pour former ladite poudre d'oxyde(s) d'actinide(s).

Le procédé de l'invention de l'invention est un procédé de mise en oeuvre simple, faisant intervenir peu d'ingrédients et permettant l'obtention, dans un premiertemps, d'une solution sol-gel stable, c'est-à-dire une solution dont l'état n'évolue pas pendant une durée longue, par exemple, pendant plus d'un an, sans que ne se manifestent de phénomènes de sédimentation, de sinérèse et/ou de floculation et, dans un deuxième temps, après lyophilisation et traitement thermique, une poudre composée, avantageusement, d'un empilement de nanoparticules d'oxyde(s) d'actinide(s).

Le ou lesdits éléments chimiques susceptibles d'entrer dans la composition de la poudre sont des éléments actinides, et, en particulier, il peut s'agir du thorium, auquel cas la poudre d'oxyde(s) d'actinide(s) préparée conformément au procédé de l'invention est une poudre d'oxyde de thorium ThOz.

Comme mentionné ci-dessus, le procédé de l'invention comprend, en premier lieu, une étape de préparation d'une solution sol-gel comprenant des colloïdes à base d'actinide(s) par mise en contact d'au moins un nitrate d'actinide (par exemple, du nitrate de thorium) avec au moins un acide aminé, la mise en contact s'effectuant à un pH allant de 3 à 6.

L'étape de préparation peut impliquer un seul nitrate d'actinide, lequel peut être du nitrate de thorium.

Lorsque le nitrate d'actinide est du nitrate de thorium, le nitrate de thorium peut être du nitrate de thorium pentahydraté (Th(NO₃)₄, 5H₂O).

Le ou les acides aminés utilisés dans la mise en oeuvre de l'étape a) correspondent, classiquement, à un acide carboxylique comprenant également un groupe amine et, plus particulièrement, un groupe amine primaire.

En particulier, le ou les acides aminés peu(ven)t être des acides aminés linéaires comprenant, par exemple, de 2 à 6 atomes de carbone, un acide aminé préféré entrant dans cette catégorie étant l'acide 6-aminocaproïque (également dénommé acide 6-aminohexanoïque) de formule suivante :

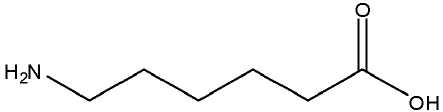

Le ou les acides aminés peu(ven)t être utilisés sous forme d'une solution le ou les comprenant avec, par exemple, la concentration en le ou les acides aminés dans la solution étant fixée en fonction du rapport molaire (actinide/acide aminé) souhaité.

Lorsque le nitrate d'actinide(s) est du nitrate de thorium et l'acide aminé est de l'acide 6-aminocaproïque, le rapport molaire entre le thorium et l'acide 6-aminocaproïque peut aller de 0,25 à 2 et peut être, plus particulièrement, égal à 0,25 ; 0,5 ; 1 ou 2.

La mise en contact s'effectue à un pH allant de 3 à 6, ce pH pouvant être obtenu par ajout d'une base, telle que de l'ammoniaque (NH₄OH), cet ajout pouvant être effectué goutte à goutte jusqu'à l'obtention du pH souhaité dans la gamme susmentionnée et cet ajout pouvant être effectué sous agitation.

Avantageusement, la mise de contact s'effectue sous agitation, de sorte à obtenir un mélange intime entre le ou les nitrate(s) d'actinide(s) et le ou les acide(s) aminé(s).

Comme évoqué ci-dessus, la formation de la solution sol-gel colloïdale s'effectue par des réactions d'hydrolyse et de condensation, lesquelles réactions peuvent engendrer la formation de complexes d'hexamères ou de nanoparticules du sol puis des liaisons entre eux ou elles.

Sans être lié par la théorie, en milieu aqueux, du fait du pouvoir polarisant et dissociant de l'eau, il va se créer des complexes hydratés à partir du ou des nitrates d'actinide(s) et, plus particulièrement sous trois formes, des complexes comprenant des cations aquo [M-OH₂]^{z+}, des complexes comprenant des cations hydroxo [M-OH]^{(z-1)+} et des complexes comprenant des cations oxo [M=0]^{(z-2)+} avec z représentant la charge du cation M⁺, l'acide aminé jouant le rôle de complexant en modifiant la sphère de coordination desdits cations et le contrôle du pH dans la gamme susmentionnée, permettant ainsi un contrôle des réactions de condensation en inhibant la propagation de celles-ci et d'éviter ainsi un phénomène de précipitation.

En particulier, lorsque le nitrate d'actinide utilisé est un nitrate de thorium, la solution sol-gel colloïdale obtenue à l'issue de l'étape a) comprend des colloïdes de tailles contrôlées (par exemple, de 1,5 à 3,5 nm) sur la base d'une maîtrise des réactions d'hydrolyse et de condensation des espèces polynucléaires de thorium existant en milieu aqueux et ceci par le contrôle simultané du pH et de la complexation des espèces.

Les solutions sol-gel colloïdales obtenues à l'issue de l'étape a) sont des solutions stables durant plus d'un an, à savoir qu'elles ne subissent pas de sédimentation, de sinérèse et de floculation et peuvent donc se conserver sous forme liquide sans risque de contamination radioactive comme cela peut être le cas avec des systèmes pulvérulents.

Après l'étape de préparation de la solution sol-gel colloïdale, celle-ci est soumise à une étape de lyophilisation, cette étape comprenant classiquement une opération de congélation de la solution sol-gel colloïdale suivie d'une opération de sublimation de l'eau congelée, cette étape de lyophilisation pouvant être réalisée à une température allant de -80°C à -110 °C, par exemple, - 110°C, et à une pression allant de 0,001 mTorr à 10 mTorr, par exemple, 1,15 mTorr.

De cette étape de lyophilisation, résulte un produit sous forme de pâte, qui va être soumis à une étape de traitement thermique pour former le ou les oxyde(s) d'actinide(s).

Cette étape de traitement thermique consiste, classiquement, à chauffer la pâte à une température efficace pour éliminer la partie organique, à savoir, dans ce cas, le ou les acides aminés utilisés à l'étape a), cette étape de traitement thermique étant également mise en oeuvre, avantageusement, sous air de sorte à former le ou les oxyde(s) d'actinide(s).

Par exemple, lorsque le nitrate d'actinide(s) est un nitrate de thorium et l'acide aminé est l'acide 6-aminocaproïque, l'étape de traitement thermique peut consister à chauffer la pâte à une température de 230°C pendant 5 heures, cette température de 230°C pouvant être atteinte par une rampe de 2, 5 ou 10°C/min.

A l'issue de cette étape, la poudre d'oxyde(s) d'actinide(s), notamment lorsque le nitrate d'actinide(s) est un nitrate de thorium et l'acide aminé est l'acide 6-aminocaproïque, peut se présenter sous forme d'un empilement de nanoparticules d'oxyde d'actinide(s), par exemple, d'oxyde de thorium ThOz, présentant une microporosité contrôlée, percolante et distribuée de manière homogène avec des micropores interconnectées entre eux et présentant également une macroporosité et une surface spécifique importante qui permet une meilleure accessibilité pour tout processus physique ou chimique nécessitant d'être réalisé à la surface du matériau, la catalyse par exemple et, plus spécifiquement, la catalyse hétérogène (la surface spécifique importante permettant de créer un grande quantité de groupements réactifs) ou l'imprégnation avec une solution d'actinides pour préparer un combustible nucléaire mixte.

Plus spécifiquement, lorsque le nitrate d'actinide(s) est le nitrate de thorium et l'acide aminé est l'acide 6-aminocaproïque (symbolisé ci-après par l'abréviation ACA) :
- pour un rapport molaire Th/ACA de 0,25 et un pH allant de 3 à 6 de la solution sol-gel, la poudre peut se caractériser par une porosité interparticulaire provenant de l'empilement compact des nanoparticules de ThOz laissant des interstices quasi-tétraédriques favorisant, si besoin est, un remplissage par une solution aqueuse et présentant une surface spécifique pouvant aller de 450 à 500 m²/g ;
- pour un rapport molaire Th/ACA supérieur ou égal à 0,5 et inférieur à 2 et un pH allant de 3 à 6, la poudre peut se caractériser par des nanoparticules de ThO₂ présentant une porosité interparticulaire et des cristallites d'oxyde de thorium et présentant une surface spécifique pouvant aller de 50 à 170 m2/g.

Sans être lié par la théorie, lors du traitement thermique, l'élimination du ou des acides aminés permet, d'une part, de former un matériau correspondant à un empilement de nanoparticules d'oxyde d'actinide(s) générant de la microporosité contrôlée, percolante et distribuée de manière homogène et, d'autre part, l'explosion thermique survenant lors du traitement thermique permettant de former la macroporosité. Cet explosion thermique, qui est le fruit d'une réaction exothermique entre un oxydant (ici, le nitrate) et entre un agent réducteur (ici, le ou les acides aminés) permet de former une macroporosité distribuée de manière homogène et ce d'autant plus que l'oxydant et l'agent réducteur sont mis en contact intimement lors de l'étape de préparation de la solution sol-gel.

D'autres caractéristiques et avantages de l'invention apparaîtront mieux à la lecture du complément de description qui suit, lequel se rapporte à un exemple de préparation de poudres d'oxyde de thorium ThOz.

Bien entendu, l'exemple qui suit n'est donné qu'à titre d'illustration de l'objet de l'invention et ne constitue en aucun cas une limitation de cet objet.

### BRÈVE DESCRIPTION DES DESSINS

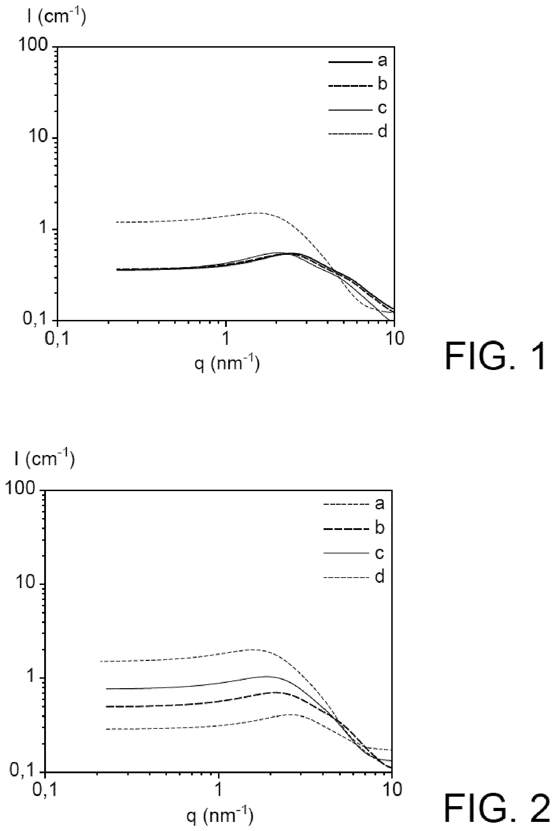

La figure 1 représente un graphique illustrant les courbes de diffusion des rayons X expérimentales et simulées obtenues par SAXS, l'ordonnée I représentant l'intensité en cm⁻¹ et l'abscisse q représentant le vecteur de diffusion en nm⁻¹, des solutions colloïdales préparées à pH= 3, 4, 5 et 6 et pour un rapport molaire Th/ACA=0,25, les courbes a), b), c) et d) correspondant respectivement à celles obtenues pour un pH=3 (pour la courbe a)), un pH=4 (pour la courbe b)), un pH=5 (pour la courbe c)) et un pH=6 (pour la courbe d)).
La figure 2 représente un graphique illustrant les courbes de diffusion des rayons X expérimentales et simulées obtenues par SAXS, l'ordonnée I représentant l'intensité en cm⁻¹ et l'abscisse q représentant le vecteur de diffusion en nm⁻¹, des solutions colloïdales préparées à pH= 3, 4, 5 et 6 et pour un rapport molaire Th/ACA=0,5, les courbes a), b), c) et d) correspondant respectivement à celles obtenues pour un pH=3 (pour la courbe a)), un pH=4 (pour la courbe b)), un pH=5 (pour la courbe c)) et un pH=6 (pour la courbe d)).

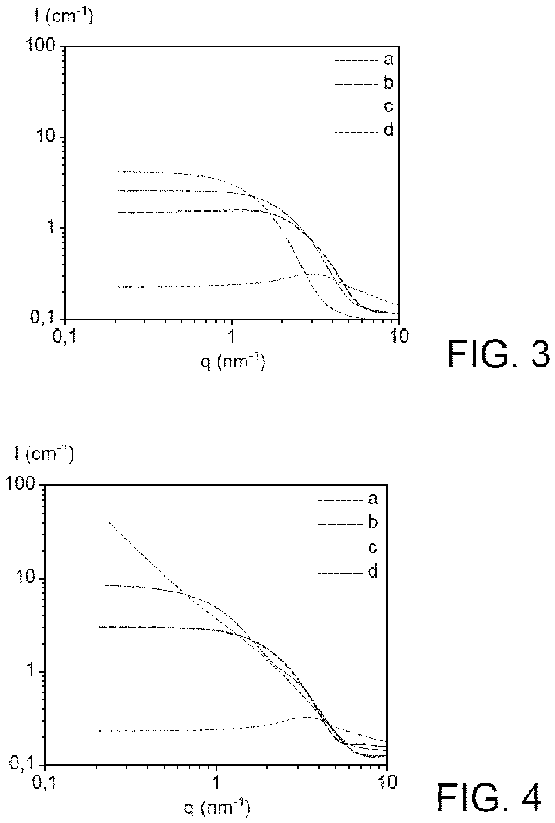

La figure 3 représente un graphique illustrant les courbes de diffusion des rayons X expérimentales et simulées obtenues par SAXS, l'ordonnée I représentant l'intensité en cm⁻¹ et l'abscisse q représentant le vecteur de diffusion en nm⁻¹, des solutions colloïdales préparées à pH= 3, 4, 5 et 6 et pour un rapport molaire Th/ACA=1, les courbes a), b), c) et d) correspondant respectivement à celles obtenues pour un pH=3 (pour la courbe a)), un pH=4 (pour la courbe b)), un pH=5 (pour la courbe c)) et un pH=6 (pour la courbe d)).
La figure 4 représente un graphique illustrant les courbes de diffusion des rayons X expérimentales et simulées obtenues par SAXS, l'ordonnée I représentant l'intensité en cm⁻¹ et l'abscisse q représentant le vecteur de diffusion en nm⁻¹, des solutions colloïdales préparées à pH= 3, 4, 5 et 6 et pour un rapport molaire Th/ACA=2, les courbes a), b), c) et d) correspondant respectivement à celles obtenues pour un pH=3 (pour la courbe a)), un pH=4 (pour la courbe b)), un pH=5 (pour la courbe c)) et un pH=6 (pour la courbe d)).

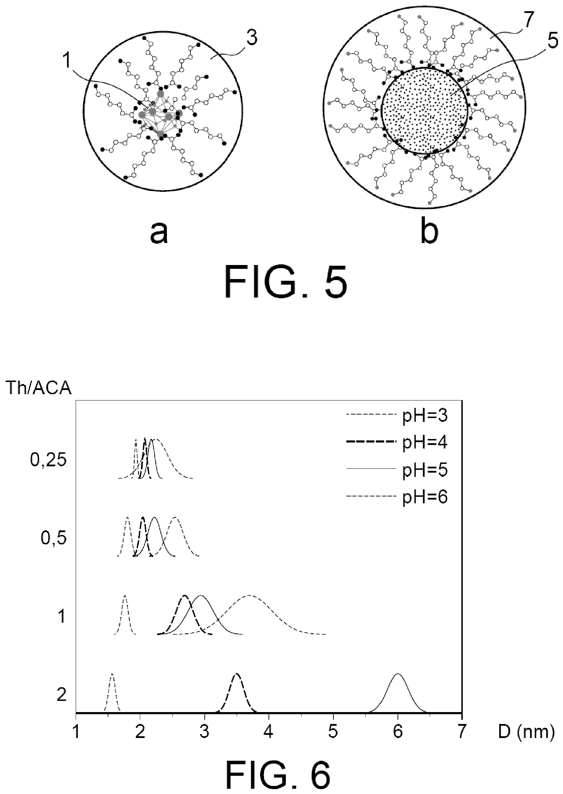

La figure 5 représentent deux représentations schématiques (Parties a et b) des complexes colloïdaux existant dans les solutions sol-gel préparées.
La figure 6 est un graphique illustrant l'évolution du diamètre D (en nm) des objets (complexes d'hexamères, nanoparticules et/ou agrégats) présents dans les solutions en fonction du rapport molaire Th/ACA dans les différentes conditions de pH (3, 4, 5 et 6).

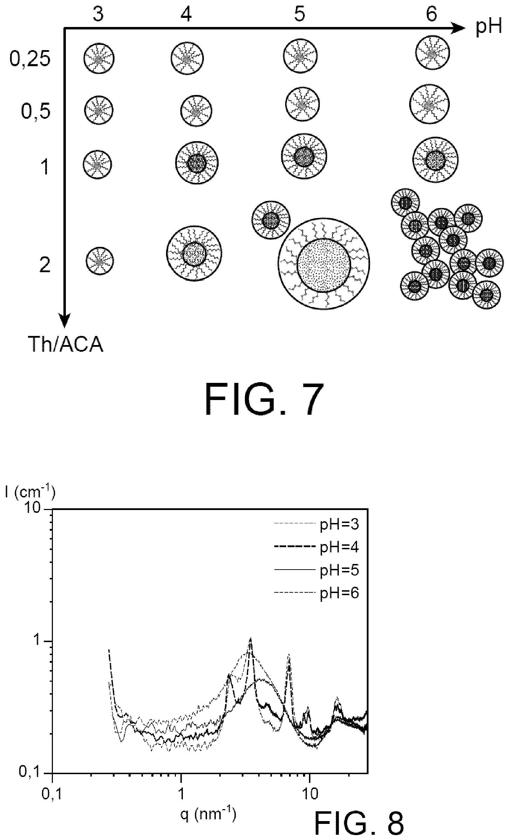

La figure 7 illustre une schématisation des objets (complexes d'hexamères, nanoparticules et/ou agrégats) présents dans les solutions colloïdales en fonction des conditions de pH et de rapport molaire Th/ACA selon les modalités de représentations des objets déjà illustrées sur la figure 5 mentionnée ci-dessus.
La figure 8 représente un graphique illustrant les courbes de diffusion des rayons X expérimentales et simulées obtenues par SAXS, l'ordonnée I représentant l'intensité en cm⁻¹ et l'abscisse q représentant le vecteur de diffusion en nm⁻¹, des pâtes issues des solutions colloïdales préparées à pH= 3, 4, 5 et 6 et pour un rapport molaire Th/ACA=0,25.

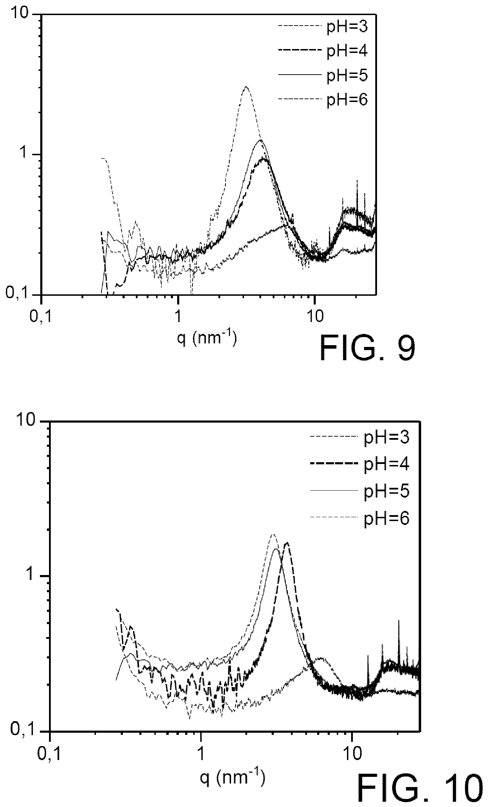

La figure 9 représente un graphique illustrant les courbes de diffusion des rayons X expérimentales et simulées obtenues par SAXS, l'ordonnée représentant l'intensité en cm⁻¹ et l'abscisse q représentant le vecteur de diffusion en nm⁻¹, des pâtes issues des solutions colloïdales préparées à pH= 3, 4, 5 et 6 et pour un rapport molaire Th/ACA=0,5.
La figure 10 représente un graphique illustrant les courbes de diffusion des rayons X expérimentales et simulées obtenues par SAXS, l'ordonnée représentant l'intensité en cm⁻¹ et l'abscisse q représentant le vecteur de diffusion en nm⁻¹, des pâtes issues des solutions colloïdales préparées à pH= 3, 4, 5 et 6 et pour un rapport molaire Th/ACA=1.

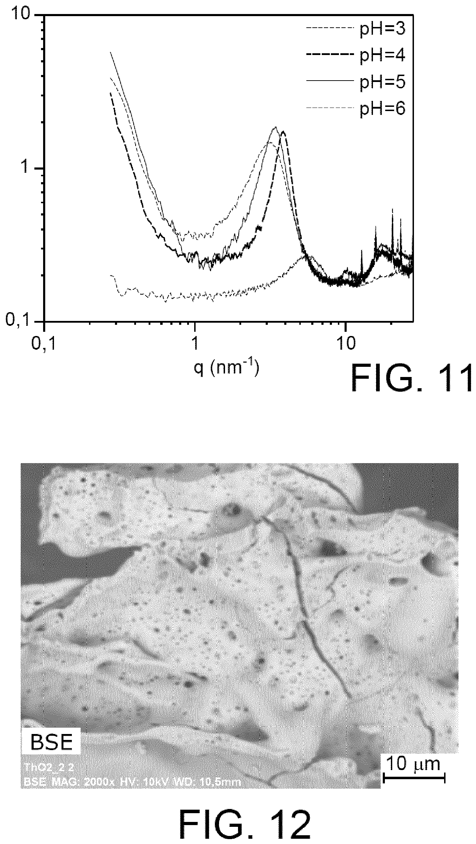

La figure 11 représente un graphique illustrant les courbes de diffusion des rayons X expérimentales et simulées obtenues par SAXS, l'ordonnée représentant l'intensité en cm⁻¹ et l'abscisse q représentant le vecteur de diffusion en nm⁻¹, des pâtes issues des solutions colloïdales préparées à pH= 3, 4, 5 et 6 et pour un rapport molaire Th/ACA=2.
La figure 12 est une image obtenue par microscopie électronique à balayage du matériau obtenu par traitement thermique à 250°C et issu de la solution colloïdale obtenue à pH=3 et pour un rapport Th/ACA=1.

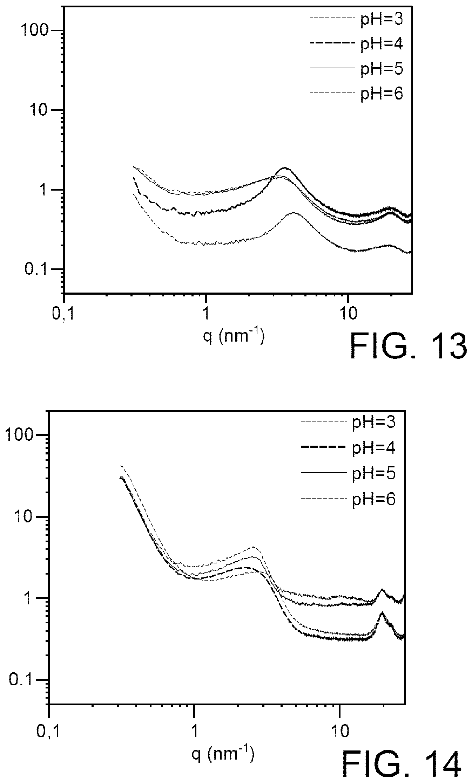

La figure 13 représente un graphique illustrant les courbes de diffusion des rayons X obtenues par SAXS, l'ordonnée représentant l'intensité en cm⁻¹ et l'abscisse q représentant le vecteur de diffusion en nm⁻¹, des matériaux traités thermiquement à 250°C et issus des solutions colloïdales préparées à pH= 3, 4, 5 et 6 et pour un rapport molaire Th/ACA=0,25.
La figure 14 représente un graphique illustrant les courbes de diffusion des rayons X obtenues par SAXS, l'ordonnée représentant l'intensité en cm⁻¹ et l'abscisse q représentant le vecteur de diffusion en nm⁻¹, des matériaux traités thermiquement à 250°C et issus des solutions colloïdales préparées à pH= 3, 4, 5 et 6 et pour un rapport molaire Th/ACA=0,5.

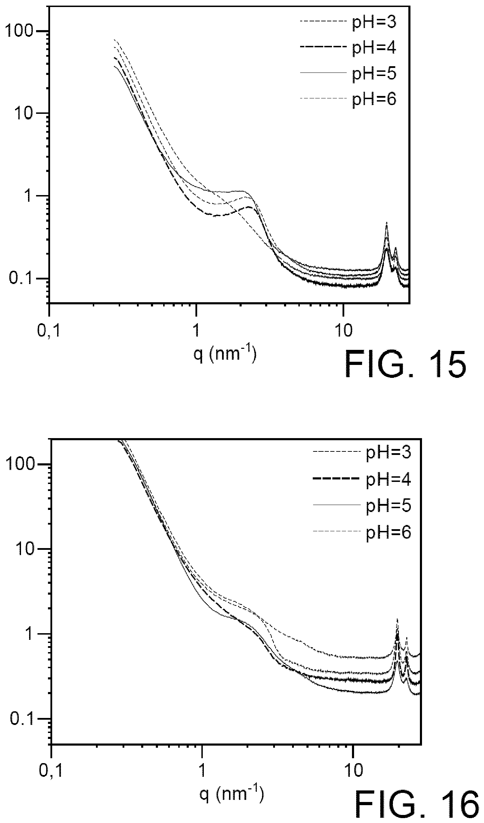

La figure 15 représente un graphique illustrant les courbes de diffusion des rayons X obtenues par SAXS, l'ordonnée représentant l'intensité en cm⁻¹ et l'abscisse q représentant le vecteur de diffusion en nm⁻¹, des matériaux traités thermiquement à 250°C et issus des solutions colloïdales préparées à pH= 3, 4, 5 et 6 et pour un rapport molaire Th/ACA=1.
La figure 16 représente un graphique illustrant les courbes de diffusion des rayons X obtenues par SAXS, l'ordonnée représentant l'intensité en cm⁻¹ et l'abscisse q représentant le vecteur de diffusion en nm⁻¹, des matériaux traités thermiquement à 250°C et issus des solutions colloïdales préparées à pH= 3, 4, 5 et 6 et pour un rapport molaire Th/ACA=2.

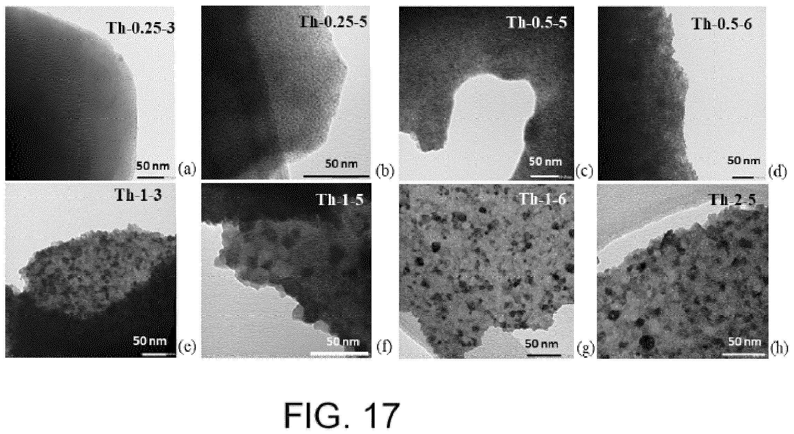

La figure 17 représente des images obtenues par microscopie électronique en transmission de matériaux avec :
   - pour la partie a), l'image du matériau traité thermiquement et issu de la solution colloïdale préparée à pH=3 et un rapport molaire Th/ACA=0,25 ;
   - pour la partie b), l'image du matériau traité thermiquement et issu de la solution colloïdale préparée à pH=5 et un rapport molaire Th/ACA=0,25 ;
   - pour la partie c), l'image du matériau traité thermiquement et issu de la solution colloïdale préparée à pH=5 et un rapport molaire Th/ACA=0,5 ;
   - pour la partie d), l'image du matériau traité thermiquement et issu de la solution colloïdale préparée à pH=6 et un rapport molaire Th/ACA=0,5 ;
   - pour la partie e), l'image du matériau traité thermiquement et issu de la solution colloïdale préparée à pH=3 et un rapport molaire Th/ACA=1 ;
   - pour la partie f), l'image du matériau traité thermiquement et issu de la solution colloïdale préparée à pH=5 et un rapport molaire Th/ACA=1 ;
   - pour la partie g), l'image du matériau traité thermiquement et issu de la solution colloïdale préparée à pH=6 et un rapport molaire Th/ACA=1 ; et
   - pour la partie h), l'image du matériau traité thermiquement et issu de la solution colloïdale préparée à pH=5 et un rapport molaire Th/ACA=2.
La figure 18 illustre une schématisation des matériaux préparés à l'exemple 3.
La figure 19 est un graphique illustrant l'évolution de la surface spécifique S (en m²/g) en fonction du pH des matériaux de l'exemple 3 obtenus pour différents rapports molaires (Th/ACA) (0,25 pour les points a ; 1 pour les points b ; 0,5 pour les points c et 2 pour les points d).

### EXPOSÉ DÉTAILLÉ DE MODES DE RÉALISATION PARTICULIERS

### EXEMPLE

Dans cet exemple, la première phase constitue la préparation de solutions colloïdales stables à base de thorium (IV).

Pour ce faire, 0,5 g de nitrate de thorium pentahydraté (Th(NO₃)₄.5H₂O) est ajouté à une solution de 2,5 mL d'acide 6-aminocaproïque (dénommé ci-dessous ACA), la concentration résultante en Th (IV) étant de 0,35M, la concentration en ACA dans la solution étant variable en fonction du rapport molaire (Th/ACA) souhaité. Le pH est ensuite ajusté par l'ajout d'une solution d'ammoniaque (NH₄OH) à 3M sous agitation, la quantité de solution d'ammoniaque ajoutée étant fonction du pH souhaité.

Sur la base de ce protocole, des solutions colloïdales avec les rapports molaires (Th/ACA) respectifs (0,25 ; 0,5 ; 1 et 2) et des pH respectifs (3 ; 4 ; 5 et 6) sont préparées.

La structure et l'organisation des solutions colloïdales obtenues et, plus spécifiquement, la taille des objets présents dans les solutions colloïdales et leurs interactions (c'est-à-dire les espèces polynucléaires et/ou colloïdales) ont été déterminés par la technique de diffusion des rayons X aux petits angles (connue sous l'abréviation SAFX pour « *Small Angle X-rays Scattering* ») comme exposé ci-dessous.

Les figures 1 à 4 illustrent respectivement les courbes de diffusion des rayons X expérimentales et simulées obtenues par SAXS (l'ordonnée I représentant l'intensité en cm⁻¹ et l'abscisse q représentant le vecteur de diffusion en nm⁻¹) des solutions colloïdales préparées à pH= 3, 4, 5 et 6 et pour des rapports molaires Th/ACA=0,25 (pour la figure 1), Th/ACA=0,5 (pour la figure 2), Th/ACA=1 (pour la figure 3) et Th/ACA=2 (pour la figure 4). Pour chacune des figures, les courbes a), b), c) et d) correspondent respectivement à celles obtenues pour un pH=3 (pour la courbe a)), un pH=4 (pour la courbe b)), un pH=5 (pour la courbe c)) et un pH=6 (pour la courbe d)).

Des figures 1 à 4 découlent les résultats suivants :
(i) quel que soit le pH et lorsque le rapport molaire Th/ACA est inférieur ou égal à 0,5 et lorsque le rapport molaire Th/ACA est supérieur ou égal à 1 et le pH est égal à 3, les courbes de diffusion sont caractéristiques d'objets nanométriques chargés en répulsion (avec un trou de corrélation pour q<0,8 nm⁻¹), ces objets nanométriques étant des complexes d'hexamères à base de thorium et d'ACA, dont un de ces complexes est représenté schématiquement sur la figure 5 (partie a) avec le coeur 1 représentant l'hexamère de thorium et l'écorce 3 représentant l'ACA ;
(ii) lorsque le rapport molaire Th/ACA est supérieur ou égal à 1 et pH est supérieur ou égal à 4, les courbes de diffusion présentent une forme caractéristique de la présence d'objets sphériques (avec un plateau à q<1 nm⁻¹) de l'ordre du nanomètre. Dans ce domaine du pH et de concentration en thorium, l'augmentation de ces deux paramètres, le rapport molaire Th/ACA et le pH, favorise la concentration des espèces hydroxo conduisant à la formation de nanoparticules ThₓO_{y}(OH)_{z} amorphes, cette taille nanométrique correspondant à des nanoparticules de 10 à 20 oxydes stoechiométriques de thorium (IV) condensés en amas isométriques globulaires, dont une de ces nanoparticules est représentée sur la figure 5 (partie b) par le coeur 5 entouré d'une écorce 7 comprenant l'ACA ;
(iii) pour le rapport molaire Th/ACA=2 et pH=6, l'augmentation de l'intensité diffusée à faible valeur de q traduit la formation d'agrégats fractals de nanoparticules et donc une réparation non homogène de la matière.

Les distributions de tailles de ces objets obtenues par simulation des courbes de diffusion des rayons X sont représentées sur la figure 6, qui est un graphique ayant pour abscisse le diamètre D (en nm) et pour ordonnée le rapport molaire Th/ACA, tandis que la figure 7 illustre une schématisation des objets (complexes d'hexamères, nanoparticules et agrégats) présents dans les solutions colloïdales en fonction des conditions de pH et de rapport molaire Th/ACA selon les modalités de représentations des objets déjà illustrées sur la figure 5 mentionnée ci-dessus.

Dans cette deuxième phase de préparation, les solutions colloïdales obtenues à l'exemple 1 ci-dessus sont soumises à un traitement de lyophilisation à -110°C et 1,15 nmTorr pendant 24 heures de sorte à éliminer les molécules d'eau situées dans le coeur des complexes ou nanoparticules et celles physisorbées, cette élimination se traduisant par un rapprochement des espèces polynucléaires/colloïdes voire un auto-assemblage de ces espèces ou une organisation de celles-ci. La lyophilisation permet aussi une conservation de l'état de surface (complexation et charge) des hexamères et des nanoparticules.

Les pâtes obtenues sont analysées par la technique de diffusion des rayons X aux petits angles, de laquelle découlent les figures 8 à 11, qui illustrent respectivement les courbes de diffusion des rayons X expérimentales et simulées obtenues par SAXS (l'ordonnée représentant l'intensité en cm⁻¹ et l'abscisse q représentant le vecteur de diffusion en nm⁻¹) des pâtes issues des solutions colloïdales préparées à pH= 3, 4, 5 et 6 pour des rapports molaires Th/ACA=0,25 (pour la figure 8), Th/ACA=0,5 (pour la figure 9), Th/ACA=1 (pour la figure 10) et Th/ACA=2 (pour la figure 11).

A l'exception des échantillons obtenus à partir des solutions colloïdales préparées à pH=3 et pH=4 avec un rapport molaire Th/ACA=0,25, la plupart des donnes SAXS présentent un pic large autour de q=3 nm⁻¹. L'intensité maximale de ces pics est supérieure à l'intensité maximale des courbes des solutions colloïdales. Cela indique la formation d'un système plus concentré après le processus de lyophilisation. Les pics présents pour les plus valeurs de q sont relatifs à la cristallisation du composé NH₄NO₃.

La diffusion des rayons X met en évidence trois types de systèmes concentrés, comme illustrés sur la figure 12 qui illustre une schématisation des objets présents dans les pâtes en fonction des conditions de pH et de rapport molaire Th/ACA de l'obtention des solutions colloïdales :
(i) pour un rapport molaire Th/ACA=0,25 et un pH inférieur ou égal à 4, les courbes de diffusion des rayons X présentent plusieurs pics pour q>1 nm⁻¹ correspondant à une superposition de deux phases lamellaires (L_{α} et L_{β}) avec des distances caractéristiques de 2,6 nm et 1,8 nm respectivement, la phase L_{α} correspondant aux couches formées par les hexamères complexés par l'ACA, tandis que la phase L_{β} correspond à une structure lamellaire moins ordonnée d'amas d'hexamères ;
(ii) pour les autres pâtes, les courbes de diffusion des rayons X présentent un large pic autour de q=3 nm⁻¹ indiquant la présence d'une phase liquide ordonnée de complexes d'hexamères pour Th/ACA=0,25 et pH>_5 et Th/ACA≤0,5 et pH≥4 et d'un réseau de nanoparticules complexées pour Th/ACA≥1 et pH≥4. Dans le cas des complexes d'hexamères, l'augmentation du pH conduit à la déprotonation de l'ACA et donc augmente la charge efficace des complexes d'hexamères, les complexes ne pouvant ainsi pas former une phase lamellaire en raison de leur forte répulsion électrostatique ;
(iii) pour Th/ACA=2 et pH≥2, les courbes de diffusion SAXS présentent un large pic similaire au cas (ii) exposé ci-dessus mais avec une augmentation de l'intensité à faible q indiquant la présence d'agrégats de nanoparticules.

Les pâtes obtenues à l'issue de la lyophilisation sont ensuite traités thermiquement sous air à 230°C pendant 5 heures en utilisant une rampe de montée en température de 10°C/min pour éliminer l'ACA.

Outre l'élimination de l'ACA, qui se décompose par combustion dès 210°C, comme attesté par ATG, ce traitement thermique engendre une explosion thermique due à la présence de nitrates remplissant le rôle d'oxydant et de l'ACA remplissant le rôle de combustible. Cette explosion thermique permet la création de macroporosité au sein du matériau obtenu sous forme de poudre, comme l'atteste la figure 12, qui est une image obtenue par microscopie électronique à balayage du matériau obtenu par traitement thermique à 250°C et issu de la solution colloïdale obtenue à pH=3 et pour un rapport Th/ACA=1.

Après traitement thermique, les matériaux sont analysés par SAXS, de laquelle découlent les courbes de diffusion des rayons X (l'ordonnée représentant l'intensité en cm⁻¹ et l'abscisse q représentant le vecteur de diffusion en nm⁻¹) des matériaux traités thermiquement à 250°C et issus des solutions colloïdales préparées à pH= 3, 4, 5 et 6 et pour des rapports molaires Th/ACA=0,25 (pour la figure 13), Th/ACA=0,5 (pour la figure 14), Th/ACA=1 (pour la figure 15) et Th/ACA=2 (pour la figure 16).

Les matériaux sont également analysés par microscopie électronique en transmission, les images résultantes étant représentées sur la figure 17 avec :
- pour la partie a), l'image du matériau traité thermiquement et issu de la solution colloïdale préparée à pH=3 et un rapport molaire Th/ACA=0,25 ;
- pour la partie b), l'image du matériau traité thermiquement et issu de la solution colloïdale préparée à pH=5 et un rapport molaire Th/ACA=0,25 ;
- pour la partie c), l'image du matériau traité thermiquement et issu de la solution colloïdale préparée à pH=5 et un rapport molaire Th/ACA=0,5 ;
- pour la partie d), l'image du matériau traité thermiquement et issu de la solution colloïdale préparée à pH=6 et un rapport molaire Th/ACA=0,5 ;
- pour la partie e), l'image du matériau traité thermiquement et issu de la solution colloïdale préparée à pH=3 et un rapport molaire Th/ACA=1 ;
- pour la partie f), l'image du matériau traité thermiquement et issu de la solution colloïdale préparée à pH=5 et un rapport molaire Th/ACA=1 ;
- pour la partie g), l'image du matériau traité thermiquement et issu de la solution colloïdale préparée à pH=6 et un rapport molaire Th/ACA=1 ; et
- pour la partie h), l'image du matériau traité thermiquement et issu de la solution colloïdale préparée à pH=5 et un rapport molaire Th/ACA=2.

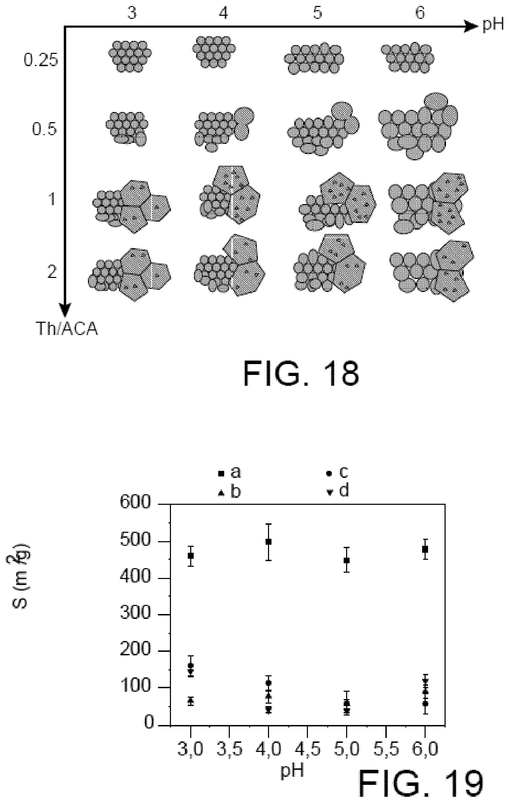

L'analyse des résultats issus de ces deux techniques permet de déduire deux types de matériaux schématisés sur la figure 18 (en fonction du pH et du rapport (Th/ACA)) et plus spécifiquement :
(i) pour les matériaux issus des solutions colloïdales préparées pour un rapport molaire (Th/ACA)=0,25 et quel que soit le pH, le spectre de diffusion des rayons X présente un large pic autour de q=3 nm⁻¹ indiquant la présence d'une porosité interparticulaire provenant de l'empilement compact des nanoparticules de ThO₂ laissant des interstices quasi-tétraédriques favorisant un remplissage ultérieur par une solution aqueuse ;
(ii) pour un rapport molaire (Th/ACA) >_ 0,5, le spectre de diffusion des rayons X présente aussi un large pic autour de q=3 nm⁻¹ et une augmentation de l'intensité diffusée à faible q avec une pente en q⁻⁴ caractéristique d'une surface lisse ainsi que des pics pour des valeurs élevées de q caractéristiques de la présence d'une structure cristalline de type cfc. Dans ce cas, les matériaux sont composés d'un assemblage de nanoparticules de ThO₂ avec de la porosité interparticulaire et des cristallites de ThO₂.

La distance caractéristique d (d=2Π/q) correspondant au maximum d'intensité du pic à 3 nm⁻¹ et relative à une distance moyenne entre les pores, augmente avec le rapport molaire (Th/ACA) de 1,5 nm à 2,5 nm comme attesté par le tableau ci-dessous. De plus, lorsque le rapport molaire (Th/ACA) augmente et/ou le pH diminue, ce même pic devient plus large et moins intense indiquant une perte de structure des pores. Ce phénomène provient de la formation de cristallites ayant une taille plus grande que la taille des nanoparticules. Cette tendance est vérifiée par la taille des cristallites comprise entre 8 et 33 nm déterminée par l'équation de Scherrer à partir de la largeur des pics à hauteur de valeur de q correspondant à la structure fluorite de ThO₂ ((111) à 0,32 nm et (200) à 0,28 nm).

Dans le tableau ci-dessous, les échantillons sont indiqués par le formalisme suivant, Th-a-b, a désignant le rapport molaire Th/ACA utilisé lors de la préparation de la solution colloïdale et b le pH.

| Echantillon | Th-0,25-3 | Th-0,25-4 | Th-0,25-5 | Th-0,25-6 | Th-0,5-3 | Th-0,5-4 | Th-0,5-5 | Th-0,5-6 |
|---|---|---|---|---|---|---|---|---|
| d (nm) | 1,5 | 1,8 | 1,8 | 1,8 | 2,0 | 2,3 | 2,4 | 2,5 |
| Echantillon | Th-0,25-3 | Th-0,25-4 | Th-0,25-5 | Th-0.25-6 | Th-0,5-3 | Th-0,5-4 | Th-0,5-5 | Th-0,5-6 |
| τ(nm) | - | - | - | - | 8,4 | 9,1 | 10,3 | 10,3 |
| Echantillon | Th-1-3 | Th-1-4 | Th-1-5 | Th-1-6 | Th-2-3 | Th-2-4 | Th-2-5 | Th-2-6 |
| τ(nm) | 33,3 | 13,4 | 20,3 | 14,1 | 33,1 | 33,5 | 23,3 | 15,9 |

A partir des données obtenues par SAXS, des mesures de surface spécifique ont pu être également calculées en utilisant la loi de Porod. Les résultats sont représentés sur la figure 19, qui est un graphique illustrant l'évolution de la surface spécifique S (en m²/g) en fonction du pH.

Les valeurs de surface spécifique les plus élevées, entre 450 et 500 m²/g sont obtenues pour des rapports molaires (Th/ACA)=0,25. Pour les autres conditions d'élaboration des solutions colloïdales, les matériaux qui en sont issus présentent des surfaces spécifiques comprises entre 50 et 170 m²/g.

La porosité présente au sein de ces matériaux est accessible comme le montrent les cartographies du Th et du Hf obtenues par microscopie électronique à balayage couplée à l'EDS après imprégnation de la poudre avec une solution de HfCl₄.

## Revendications

1. Procédé de préparation d'une poudre d'oxyde(s) d'actinide(s) comprenant les étapes suivantes :
a) une étape de préparation d'une solution sol-gel comprenant des colloïdes à base d'actinide(s) par mise en contact d'au moins un nitrate d'actinide avec au moins un acide aminé, la mise en contact s'effectuant à un pH allant de 3 à 6 ;
b) une étape de lyophilisation de ladite solution obtenue en a), moyennant quoi il résulte une pâte ;
c) une étape de traitement thermique de ladite pâte obtenue en b) à une température efficace pour former ladite poudre d'oxyde(s) d'actinide(s).

2. Procédé selon la revendication 1, dans lequel la poudre d'oxyde(s) d'actinide(s) est une poudre d'oxyde de thorium ThOz.

3. Procédé selon la revendication 1 ou 2, dans lequel le nitrate d'actinide est du nitrate de thorium.

4. Procédé selon la revendication 3, dans lequel, lorsque le nitrate d'actinide(s) est du nitrate de thorium, le nitrate de thorium est du nitrate de thorium pentahydraté Th(NO₃)₄, 5H₂O.

5. Procédé selon l'une quelconque des revendications précédentes, dans lequel l'acide aminé est un acide aminé linéaire comprenant de 2 à 6 atomes de carbone.

6. Procédé selon l'une quelconque des revendications précédentes, dans lequel l'acide aminé est l'acide 6-aminocaproïque.

7. Procédé selon l'une quelconque des revendications précédentes, dans lequel le pH est obtenu par ajout d'une base.

8. Procédé selon la revendication 7, dans lequel la base est de l'ammoniaque.

9. Procédé selon l'une quelconque des revendications précédentes, dans lequel l'étape de mise en contact s'effectue sous agitation.

10. Procédé selon l'une quelconque des revendications précédentes, dans lequel, lorsque le nitrate d'actinide(s) est du nitrate de thorium et l'acide aminé est de l'acide 6-aminocaproïque, le rapport molaire entre le thorium et l'acide 6-aminocaproïque va de 0,25 à 2.

11. Procédé selon l'une quelconque des revendications précédentes, dans lequel l'étape de traitement thermique consiste à chauffer la pâte à une température efficace pour éliminer la partie organique.

12. Procédé selon l'une quelconque des revendications précédentes, dans lequel l'étape de traitement thermique est réalisée sous air.

## Patentansprüche

1. Verfahren zur Herstellung eines Aktinidoxid(e)-Pulvers, umfassend die folgenden Schritte:
a) einen Schritt zur Herstellung einer Sol-Gel-Lösung, die Kolloide auf der Basis von Aktinid(en) umfasst, durch Inkontaktbringen von mindestens einem Aktinidnitrat mit mindestens einer Aminosäure, wobei das Inkontaktbringen bei einem pH-Wert im Bereich von 3 bis 6 erfolgt;
b) einen Schritt des Gefriertrocknens der in a) erhaltenen Lösung, wodurch eine Paste entsteht;
c) einen Schritt der Wärmebehandlung der in b) erhaltenen Paste bei einer Temperatur, die wirksam ist, um das Aktinidoxid(e)-Pulver zu bilden.

2. Verfahren nach Anspruch 1, wobei es sich bei dem Aktinidenoxid(e)-Pulver um ein Thoriumoxid-ThO₂-Pulver handelt.

3. Verfahren nach Anspruch 1 oder 2, wobei es sich bei dem Aktinidennitrat um Thoriumnitrat handelt.

4. Verfahren nach Anspruch 3, wobei, wenn es sich bei dem Aktinid(e)-Nitrat um Thoriumnitrat handelt, es sich bei dem Thoriumnitrat um Thoriumnitratpentahydrat Th(NO₃)₄, 5H₂O handelt.

5. Verfahren nach einem der vorhergehenden Ansprüche, wobei die Aminosäure eine lineare Aminosäure mit 2 bis 6 Kohlenstoffatomen ist.

6. Verfahren nach einem der vorhergehenden Ansprüche, wobei es sich bei der Aminosäure um 6-Aminocapronsäure handelt.

7. Verfahren nach einem der vorhergehenden Ansprüche, wobei der pH-Wert durch Zugabe einer Base erhalten wird.

8. Verfahren nach Anspruch 7, wobei es sich bei der Base um Ammoniak handelt.

9. Verfahren nach einem der vorhergehenden Ansprüche, wobei der Schritt des Inkontaktbringens unter Rühren durchgeführt wird.

10. Verfahren nach einem der vorhergehenden Ansprüche, wobei, wenn es sich bei dem Aktinidennitrat um Thoriumnitrat handelt und es sich bei der Aminosäure um 6-Aminocapronsäure handelt, das Molverhältnis zwischen Thorium und 6-Aminocapronsäure von 0,25 bis 2 reicht.

11. Verfahren nach einem der vorhergehenden Ansprüche, wobei der Schritt der Wärmebehandlung das Erhitzen der Paste auf eine Temperatur umfasst, die wirksam ist, um den organischen Anteil zu entfernen.

12. Verfahren nach einem der vorhergehenden Ansprüche, wobei der Wärmebehandlungsschritt unter Luft durchgeführt wird.

## Claims

1. A method for preparing an actinide oxide powder comprising the following steps:
a) a step of preparing a sol-gel solution comprising actinide(s)-based colloids by contacting at least one actinide nitrate with at least one amino acid, the contact being carried out at a pH ranging from 3 to 6;
b) a lyophilization step of said solution obtained in a), whereby a paste is obtained;
c) a step of heat treating said paste obtained in b) at an effective temperature to form said actinide oxide powder.

2. The method according to claim 1, wherein the actinide oxide powder is a thorium oxide ThO₂ powder.

3. The method according to claim 1 or 2, wherein the actinide nitrate is thorium nitrate.

4. The method according to claim 3, wherein, when the actinide nitrate is thorium nitrate, the thorium nitrate is thorium nitrate pentahydrate Th(NO₃)₄,5H₂O.

5. The method according to any one of the preceding claims, wherein the amino acid is a linear amino acid comprising from 2 to 6 carbon atoms.

6. The method according to any one of the preceding claims, wherein the amino acid is 6-aminocaproic acid.

7. The method according to any one of the preceding claims, wherein the pH is obtained by adding a base.

8. The method according to claim 7, wherein the base is ammonia.

9. The method according to any one of the preceding claims, wherein the contacting step is carried out with stirring.

10. The method according to any one of the preceding claims, wherein, when the actinide nitrate is thorium nitrate and the amino acid is 6-aminocaproic acid, the molar ratio between thorium and 6-aminocaproic acid ranges from 0.25 to 2.

11. The method according to any one of the preceding claims, wherein the heat treatment step consists of heating the paste to an effective temperature to eliminate the organic part.

12. The method according to any one of the preceding claims, wherein the heat treatment step is carried out under air.
